# FASCICULE DE BREVET EUROPEEN

(11) **EP 0 515 289 B1**
(45) Date de publication et mention de la délivrance du brevet: **04.12.1996**
(21) Numéro de dépôt: 92401417.8
(22) Date de dépôt: 25.05.1992
(51) Int. Cl.: A01G 13/02, B65H 75/24

(54) **Machine pour l'enlèvement de larges bandes étendues sur le sol**
Maschine zum Entfernen von auf dem Boden ausgebreiteten Breitbändern
Machine for removing extended wide strips on the soil

(30) Priorité: 24.05.1991 FR 9106293; 18.02.1992 FR 9201832
(43) Date de publication de la demande: 25.11.1992
(73) Titulaire: SARL DL SYSTEM, F-28800 Sancheville (FR)
(72) Inventeur: Lavo, Guy, F-28800 Sancheville (FR)
(74) Mandataire: Casalonga, Axel

(56) Documents cités:
- EP-A- 0 474 575
- DE-A- 2 628 339
- FR-A- 2 562 382
- US-A- 2 370 868

## Description

La présente invention concerne une machine destinée à l'enlèvement de larges bandes étendues sur le sol, plus particulièrement destinée au domaine de l'agriculture.

Lors de la culture de certaines plantes, on dépose sur le sol des bandes larges de recouvrement en matière plastique, notamment des films de polyester, de polyéthylène ou de polypropylène, dont les bords sont en général enfouis dans la terre ou tenus par des piquets et au travers desquels ou en-dessous desquels poussent les cultures. Actuellement, l'opération d'enlèvement de ces bandes ou films de recouvrement du sol est exécutée à la main. On comprend aisément que cette opération est fastidieuse et longue et que les bandes ou films sont difficilement réutilisables.

La demande de brevet européen N° 474575, déposée le 3 septembre 1991 sous une priorité du 03 septembre 1990 et publiée le 11 mars 1992, décrit une machine d'enlèvement de bande qui comprend un ensemble de nettoyage en contact avec un rouleau en libre rotation sur un châssis et constitué de deux brosses souples disposées à 180° et de deux lames rigides également disposées à 180°.

Dans le brevet FR-A-2 562 382 est décrite une machine d'enlèvement de bandes dans laquelle la bande va directement du sol sur un rouleau de réception qui est entraîné par les roues de la machine, des balais brossant vers l'extérieur les bords de cette bande.

Le but de la présente invention est de proposer une machine qui permet d'exécuter l'opération d'enlèvement et de récupération d'une bande de préférence sans intervention manuelle et en continu.

Selon un premier objet de l'invention, la machine destinée à l'enlèvement de bandes étendues sur le sol, comprend des moyens rotatifs récepteurs pour enrouler la bande à distance du sol afin de former une bobine, des moyens pour entraîner en rotation les moyens récepteurs précités, un tambour monté tournant sur lequel passe la bande avant d'atteindre les moyens récepteurs précités, ainsi que des moyens de brossage rotatifs disposés de telle sorte que la bande passe entre ces moyens de brossage et le tambour et appliquant la bande sur le tambour, et des moyens d'entraînement en rotation de ces moyens de brossage.

Selon l'invention, ledit tambour est de préférence monté libre en rotation.

Selon l'invention, ledit tambour peut avantageusement présenter, au moins sur ses parties d'extrémité, des diamètres allant en diminuant vers chacune de ses extrémités.

Dans un mode d'exécution préféré de l'invention, la partie périphérique du tambour comprend deux parties opposées tronconiques et une partie centrale cylindrique les rejoignant.

Selon l'invention, la partie périphérique dudit tambour est de préférence composée d'une multiplicité de barres qui s'étendent respectivement dans des plans radiaux de ce tambour.

Ces barres s'étendent de préférence entre deux platines d'extrémité du tambour, chaque barre présentant une partie centrale coudée à partir de laquelle elles s'étendent rectilignement.

Selon l'invention, lesdits moyens de brossage peuvent avantageusement tourner dans un sens tel qu'ils tirent la bande en direction des moyens récepteurs précités, ces moyens de brossage brossant de préférence la bande en direction de ses bords.

Dans une variante préférée de l'invention, lesdits moyens de brossage comprennent au moins deux brosses cylindriques disposées de part et d'autre du plan radial médian du tambour précité, les axes de ces brosses étant inclinés par rapport à la direction longitudinale de la bande de telle sorte leurs extrémités adjacentes soient, par rapport au sens d'avancement de la bande, en avant de leurs autres extrémités, ces brosses étant entraînées en rotation de manière à brosser la bande dans le sens de son déplacement, en direction de ses bords.

La machine selon l'invention peut en outre comprendre des moyens de régulation de la vitesse de rotation des moyens récepteurs précités en fonction de la tension de la bande en amont de ces moyens récepteurs.

La machine selon l'invention peut comprendre, entre ledit tambour et les moyens récepteurs précités, des moyens palpeurs sur lesquels passe la bande, ces moyens palpeurs étant déplaçables sous l'effet du déplacement de la bande dans le sens de son épaisseur et étant reliés à un organe de régulation des moyens d'entraînement en rotation des moyens récepteurs précités.

Selon l'invention, lesdits moyens palpeurs peuvent avantageusement comprendre un rouleau s'étendant transversalement à la bande et monté sur des bras mobiles, au moins l'un de ces bras étant reliés à un organe mobile de régulation du circuit hydraulique d'un moteur hydraulique d'entraînement des moyens récepteurs précités.

Selon l'invention, la bande passe de préférence au-dessus du tambour, des moyens déflecteurs situés près des moyens de brossage, au-dessus de la bande, évacuant au-delà des bords de la bande ce qui est brossé.

La machine selon l'invention comprend en outre, de préférence, des socs déterreurs passant dans la terre sous au moins les bords de la bande.

Selon l'invention, lesdits moyens de brossage sont de préférence réglables par rapport audit tambour.

Selon un autre objet de l'invention, la machine destinée à l'enlèvement de bandes étendues sur le sol, comprend des moyens rotatifs récepteurs pour enrouler la bande à distance du sol afin de former une bobine, des moyens pour entraîner en rotation les moyens récepteurs précités, un tambour monté tournant sur lequel passe la bande avant d'atteindre les moyens récepteurs précités, ainsi que des moyens de régulation de la vitesse de rotation des moyens récepteurs précités en fonction de la tension de la bande en amont de ces moyens récepteurs.

Dans une variante préférée de réalisation, lesdits moyens de régulation comprennent des moyens palpeurs sur lesquels passe la bande et qui sont disposés entre ledit tambour et les moyens récepteurs précités, ces moyens palpeurs étant déplaçables sous l'effet du déplacement de la bande dans le sens de son épaisseur et étant reliés à un organe de régulation des moyens d'entraînement en rotation des moyens récepteurs précités.

De façon simple, lesdits moyens palpeurs comprennent de préférence un rouleau s'étendant transversalement à la bande et monté sur des bras mobiles, au moins l'un de ces bras étant reliés à un organe mobile de régulation du circuit hydraulique d'un moteur hydraulique d'entraînement des moyens récepteurs précités.

Selon un autre objet de l'invention, la machine destinée à l'enlèvement de bandes étendues sur le sol comprend des moyens rotatifs récepteurs pour enrouler la bande à distance du sol afin de former une bobine, des moyens pour entraîner en rotation les moyens récepteurs précités, un tambour monté tournant sur lequel passe la bande avant d'atteindre les moyens récepteurs précités, lesdits moyens récepteurs comprenant un mandrin monté sur le châssis de la machine grâce à des moyens de rotation portant ses extrémités et présentant au moins une partie mobile telle que ce mandrin est séparable du châssis de la machine, ce mandrin présentant des moyens de rétraction permettant son extraction de la bobine formée quand il est séparé du châssis de la machine pour pouvoir être remonté sur ce châssis.

Selon l'invention, le mandrin précité comprend de préférence une multiplicité de barres formant la périphérie du mandrin, un premier et un second éléments d'extrémité espacés dans le sens axial du mandrin, l'une des extrémités desdits barres étant articulée sur le second élément d'extrémité, les autres extrémités desdites barres étant reliées au premier élément d'extrémité par des leviers qui sont articulés d'une part sur ce premier élément d'extrémité et d'autre part sur lesdites barres, des moyens étant prévus pour maintenir lesdits leviers dans une position telle que les barres sont dans une position écartée de l'axe du mandrin, ce dernier étant dans une position expansée, et pour libérer lesdits leviers afin que les barres puissent se rapprocher de l'axe du mandrin lorsque le premier élément d'extrémité est déplacé axialement au mandrin, ce dernier venant alors dans une position rétractée.

Selon l'invention, de préférence, le deuxième élément d'extrémité est également relié aux extrémités qui lui sont associées des barres respectivement par l'intermédiaire de leviers articulés d'une part sur ce second élément d'extrémité et d'autre part sur lesdites barres, des moyen étant prévus pour maintenir lesdits leviers dans une position telle que les barres sont dans une position écartée de l'axe du mandrin, ce dernier étant dans une position expansée, et pour libérer lesdits leviers afin que les barres puissent se rapprocher de l'axe du mandrin lorsque le premier élément d'extrémité est déplacé axialement au mandrin, ce dernier venant alors dans une position rétractée.

Selon l'invention, les articulations précitées desdits leviers et desdites barres sont formées de telle sorte que ces leviers et ces barres sont pivotables dans des plans radiaux.

Selon l'invention, ledit élément d'extrémité comprend de préférence un plateau d'extrémité et lesdits moyens de maintien associés comprennent de préférence, un plateau de maintien extérieur à ce plateau d'extrémité, lesdits leviers (106) présentant des prolongements s'étendant entre ces plateaux lorsque le mandrin est à sa position rétractée, et que, pour passer de sa position expansée à sa position rétractée, ledit élément d'extrémité est déplacé vers l'extérieur.

Dans une variante, ledit plateau de maintien est monté tournant sur l'élément d'extrémité associé et présente des encoches qui permettent le passage desdits prolongements lorsque ces encoches sont amenées en face de ces prolongements.

Dans une autre variante, ledit plateau est monté sur le châssis de la machine.

Selon l'invention, les moyens de rotation sont de préférence formés par deux axes opposés montés sur le châssis et déplaçables axialement pour libérer lesdits éléments d'extrémité.

La présente invention sera mieux comprise à l'étude d'une machine destinée à l'enlèvement de bandes larges étendues sur le sol, décrite à titre d'exemple non limitatif et illustré schématiquement par le dessin sur lequel :
- la figure 1 représente une coupe longitudinale d'une machine selon l'invention;
- la figure 2 représente une vue de dessus de cette machine.
- la figure 3 représente, en coupe axiale et en position expansée, un premier mandrin extractable monté sur le châssis de la machine selon la présente invention ;
- la figure 4 représente une vue en bout du mandrin représenté sur la figure 3 ;
- la figure 5 représente le mandrin de la figure 3 en coupe axiale et dans une position rétractée et d'enlèvement ;
- la figure 6 représente, en coupe axiale et en position expansée, l'une des extrémités d'un second mandrin selon la présente invention ;
- et la figure 7 représente, partiellement, une vue en bout du mandrin de la figure 6.

La machine représentée sur les figures et repérée d'une manière générale par la référence 1 est destinée à l'enlèvement d'une bande large 2 étendue sur le sol et dont les bords longitudinaux 3 sont recouverts par de la terre, cette machine pouvant être tirée et déplacée longitudinalement à la bande 2 par exemple par un tracteur non représentée.

La machine 1 comprend un châssis repéré d'une manière générale par la référence 4 qui comprend pour l'essentiel deux longerons 5 distants l'un de l'autre et une traverse avant 6 qui les relie et sur laquelle sont prévus des moyens d'amarrage tels qu'un bras 7 au tracteur précité, ce châssis 4 constituant donc un U horizontal ouvert vers l'arrière. On aurait naturellement pu prévoir d'autres traverses et notamment une traverse à l'arrière

Dans l'exemple, à leur partie arrière, les longerons 5 portent, par l'intermédiaire de bras 5a s'étendant vers le bas, deux roues opposées 8 de roulement sur le sol.

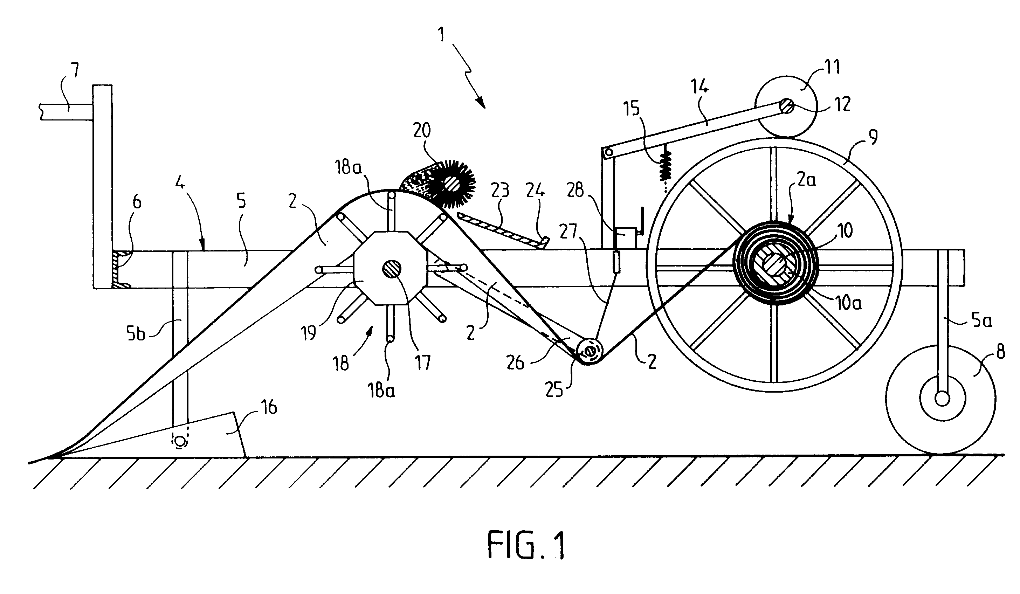

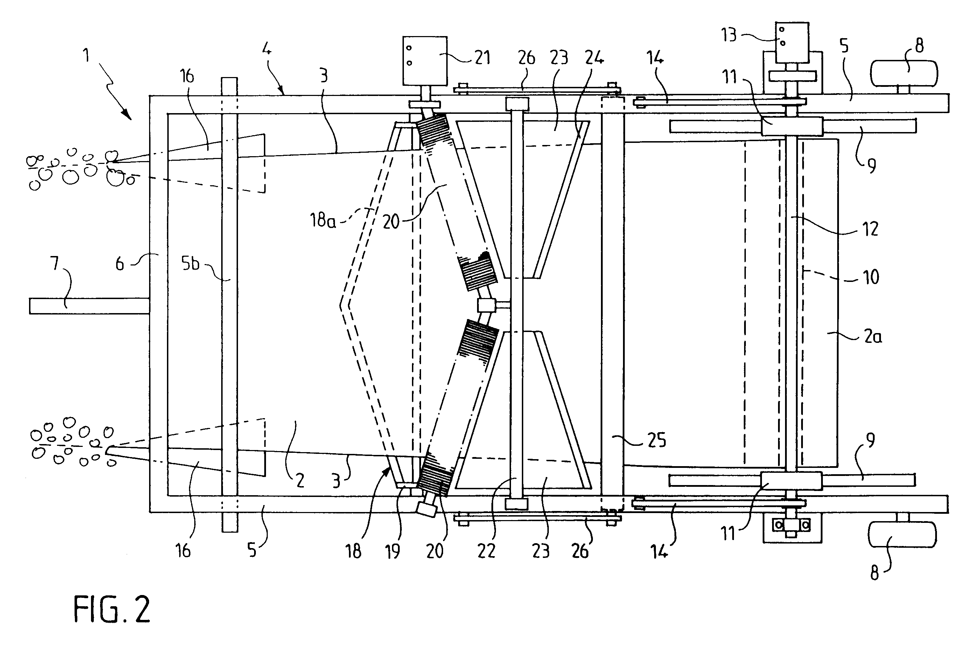

A leur partie arrière, les longerons 5 portent, en vis-à-vis et entre eux deux grandes roues 9 coaxiales à rayons qui ne touchent pas le sol et qui sont, dans la variante des figures 1 et 2, reliées en rotation par un arbre transversal amovible 10. La distance transversale entre les roues 9 est de préférence supérieure à la largeur de la bande 2.

Les roues 9 sont susceptibles d'être entraînées en rotation par des galets 11 qui prennent appui sur leur périphérie, à leur sommet, et qui sont montés sur un arbre commun transversal 12 entraîné par un moteur hydraulique 13, ces roues et cet arbre étant montés à l'extrémité de deux bras opposés 14 articulés sur les longerons 5 et soumis à des ressorts ou tendeurs 15 agissant dans le sens qui applique les galets 11 sur les roues 9 afin d'obtenir un entrainement par friction réglable par la tension de ces ressorts ou tendeurs.

A sa partie avant, le châssis 4 porte, par l'intermédiaire de bras 15b s'étendant vers le bas, deux socs déterreurs 16 qui sont appointés vers l'avant et qui sont au niveau du sol, l'écartement entre ces socs 16 étant légèrement inférieur à la largeur de la bande 2. Naturellement, l'écartement entre ces socs déterreurs est réglable afin de pouvoir être adapté à différentes largeurs de bandes à enlever et leurs positions sont également réglables par tout moyen connu.

En avant des roues 9 et en arrière des socs 16, les longerons 5 portent, libres en rotation, les extrémités d'un arbre transversal 17 qui portent, entre ces longerons 5, un tambour transversal 18.

Ce tambour transversal 18 présente à ses extrémités deux platines radiales opposées 19 et sa partie périphérique est formée, dans l'exemple, par huit barres transversales 18a de section cylindrique qui sont, dans leur partie médiane, coudées, qui se prolongent rectilignement jusqu'aux platines 19 et qui sont régulièrement réparties, de manière à former deux troncs de cône opposés, le tambour 18 présentant en conséquence des diamètres allant en diminuant vers chacune de ses extrémités.

Le châssis 4 porte en outre deux brosses cylindriques 20 qui sont associées aux deux parties tronconiques du tambour 18, ces brosses 20 étant reliées en rotation par tout moyen connu et entraînées en rotation par un moteur hydraulique 21. Elles sont en outre réglables en hauteur par rapport au tambour 18 grâce à des glissières 20a.

Les deux brosses cylindriques 20, qui sont disposées de part et d'autre du plan radial médian du tambour 18 et qui s'étendent sur toute sa longueur, sont inclinées par rapport à la direction longitudinale de la bande de telle sorte que leurs extrémités adjacentes soient en arrière de leurs autres extrémités, leurs extrémités adjacentes étant portées par une traverse 22 du châssis 4 reliée aux longerons 5.

En arrière et en-dessous des deux rouleaux 20, sont prévus deux déflecteurs 23 qui sont inclinés vers l'arrière et qui présentent un bord arrière relevé 24, ces déflecteurs 23 étant inclinés vers l'arrière et vers les côtés latéraux de la machine.

Entre les roues 9 et le tambour 18, est prévu un rouleau transversal 25 dont les extrémités sont portées par deux bras 26 inclinés dont les autres extrémités sont articulées sur les longerons 5.

L'un de ses bras 26 est relié par un tirant 27 à l'élément mobile de régulation d'un distributeur hydraulique 28 monté sur le circuit hydraulique du moteur d'entraînement des galets 11.

On va maintenant décrire comment peut être utilisée et comment fonctionne la machine 1.

Tout d'abord, on relève la partie d'extrémité d'une bande 2 enfouie par ses bords dans le sol.

On la fait passer longitudinalement au-dessus des socs déterreurs 16, au-dessus du tambour 18 en l'étendant sur ce dernier, entre ce tambour 18 et les brosses 20, en dessous des déflecteurs 23, en-dessous du rouleau transversal 25 et on l'amène entre les roues 9 où on l'attache. Par simplicité, on attache l'un de ses coins d'extrémité à l'un des barreaux de l'une des roues 9.

La machine est prête à fonctionner.

On accroche la machine 1 à un tracteur et on relie les moteurs hydrauliques 13 et 21 au circuit hydraulique du tracteur.

Au fur et à mesure de l'avancement de la machine 1, les socs 16 déterrent les bords longitudinaux de la bande 2, cette bande 2 monte vers le tambour, passe sur ce dernier et en-dessous des brosses cylindriques transversales 20, descend sous le rouleau transversal 25, puis s'enroule autour d'un noyau cylindrique 10a préalablement monté sur l'arbre 10 des roues 9 pour former une bobine 2a. Entre le sol et les brosses 20, la bande 2 est tendue et tirée grâce aux effets combinés de ces brosses et de la forme en tonneau du tambour 18. En effet, les brosses cylindriques 20, qui appuient assez fortement sur la face supérieure de la bande 2 en direction du tambour 18, brossent cette bande dans le sens de son avancement et en direction de ses bords longitudinaux, en allant plus vite qu'elle, provoquant ainsi sa traction et son maintien permanent à plat sur le tambour, la bande 2 et les brosses 20 faisant tourner le tambour 18.

En même temps, les matières qui sont sur la face supérieure de la bande sont évacuées par les brosses 20 vers les déflecteurs 23 et retombent sur le sol de part et d'autre de la bande. Bien entendu, les brosses cylindriques 20 sont montées réglables par rapport au tambour 18 afin de pouvoir régler leur action sur la bande 2.

Entre le tambour 18 et la bobine 2a la bande 2 est tendue sous l'effet du poids du rouleau transversal 25, cet effet pouvant être réglé par tout moyen, par exemple par des ressorts soutenant le rouleau 25 en agissant sur les bras 26.

La vitesse de rotation des roues 9 est régulée de manière à tenir compte de la vitesse d'avancement de la machine 1 et du diamètre grossissant de la bobine formée 2a, de la manière suivante.

Si les roues 9 tournent plus vite que nécessaire, la bande 2 se tend entre le tambour 18 et la bobine 2a et déplace vers le haut le rouleau transversal 25. Le tirant 27 déplace alors l'élément de commande du distributeur 28 de manière à réduire la vitesse de rotation du moteur hydraulique. L'effet inverse se produit lorsque la bande 2 se détend entre la bobine et le tambour 18. Ainsi, en cours d'avancement, le rouleau transversal 25 occupe sensiblement une partie médiane, sa position haute correspondant à un arrêt du moteur hydraulique 13 et en conséquence un arrêt en rotation de la bobine 2a et sa position la plus basse correspond à la vitesse maximum possible en rotation de cette bobine, correspondant à une vitesse maximum d'avance possible de la machine 1. De la sorte, la vitesse de rotation de la bobine2a est fonction de la tension de la bande 2 entre le tambour et cette bobine.

Lorsque la bobine 2a est considérée comme pleine, on enlève, en le tirant transversalement, l'axe 10. La bobine 2a tombe entre les roues 9 sur le sol et on l'évacue par l'arrière.

On remet un nouveau noyau cylindrique 10a et on réenfile d'axe 10 pour la réalisation d'une nouvelle bobine comme on l'a décrit précédemment.

Si l'on souhaite récupérer la bobine 2a en vue de son retraitement en usine, il est souhaitable qu'elle ne contienne pas le noyau 10a.

On va maintenent décrire des mandrins extractables pouvant se monter sur le châssis 4 de la machine 1.

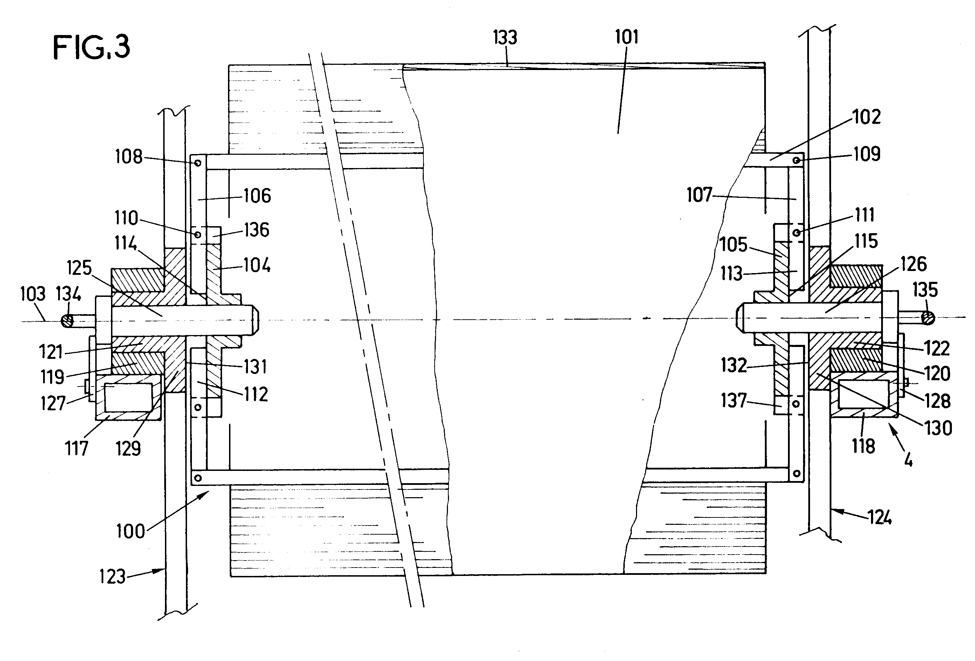

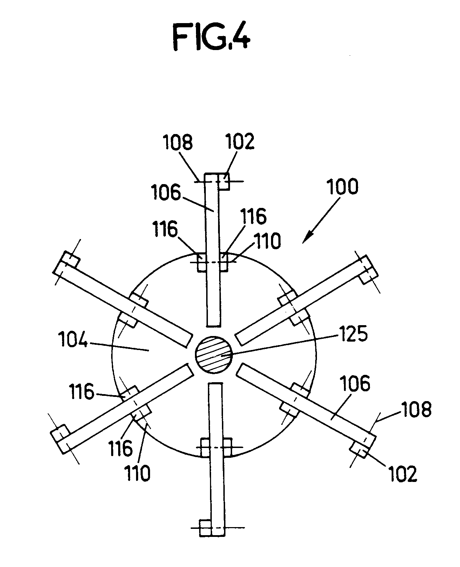

Le mandrin extractable représenté sur les figures 3 à 5, qui est repéré d'une manière générale par la référence 100, comprend une partie périphérique autour de laquelle on peut former une bobine une partie périphérique autour de laquelle on peut former une bobine 101, qui est constituée dans l'exemple par six barres 102 parallèles à l'axe 103 du mandrin et qui sont disposées à 60° les unes par rapport aux autres.

Les extrémités de chacune des barres 102 sont respectivement reliées à deux éléments d'extrémité espacés le long de l'axe 103, qui sont formés dans l'exemple par deux plateaux d'extrémité 104 et 105, par l'intermédiaire de six leviers 106 et 107 qui s'étendent dans des plans radiaux. Les leviers 106 et 107 sont respectivement reliés aux extrémités des barres 102 par des axes d'articulation 108 et 109 et sont respectivement reliés à la périphérie des plateaux 104 et 105 par l'intermédiaire d'axes d'articulation 110 et 111. Ces axes 108, 109 et 110, 111 sont tels que les leviers 106 et 107 peuvent pivoter dans des plans radiaux.

Dans l'exemple représenté, les barres 102 sont de section rectangulaire et les leviers 106 et 107 sont de section rectangulaire, leurs extrémités portant les axes d'articulation 108 et 109 étant accolées. On aurait cependant pu prévoir des barres 102 cylindriques reliées aux leviers 106 et 107 par des chapes.

Les leviers 106 et 107 présentent respectivement des prolongements 112 et 113 qui s'étendent au-delà des axes d'articulation 110 et 111, devant les faces radiales extérieures 114 et 115 des plateaux 104 et 105.

Afin que les prolongements 112 et 113 des leviers 106 et 107 puissent venir en appui contre les faces extérieures 114 et 115 des plateaux 104 et 105, ces plateaux sont respectivement munis de six paires de saillies 116 et 116a qui portent les articulations 110 et 111 des leviers 106 et 107.

En se reportant à la figure 3, on voit que le mandrin 101 est en position d'enroulement, c'est-à-dire en position expansée, dans laquelle les leviers 106 et 107 s'étendent radialement, leurs prolongements 112 et 113 étant en appui contre les faces radiales extérieures 114 et 115 des plateaux 104 et 105, et qu'il est monté de la manière suivante sur le châssis 4 de la machine, qui comprend deux longerons parallèles 117 et 118 qui correspondent aus longerons 5 de l'exemple décrit en référence aux figures 1 et 2.

Les longerons 117 et 118 portent respectivement des paliers 119 et 120 dans lesquels sont montés tournants les moyeux 121 et 122 de deux roues opposées 123 et 124 qui passent entre les longerons 117 et 118.

Au travers des moyeux 121 et 122 des roues 123 et 124, sont enfilés par l'extérieur des axes de rotation 125 et 126 qui sont également enfilés dans les plateaux 104 et 105 du mandrin 100.

Afin de maintenir les axes 125 et 126 dans cette position montée, les longerons 117 et 118 portent des plaques pivotantes 127 et 128 qui viennent devant l'extrémité épaulée des axes 125 et 126.

Les roues 123 et 124 présentent respectivement des parties centrales en forme de plateaux 129 et 130 qui présentent des faces radiales 131 et 132 qui s'étendent en vis-à-vis et à distance des faces radiales 114 et 115 des plateaux 104 et 105 du mandrin 100, de telle sorte que les prolongements 112 et 113 des leviers 106 et 107 s'étendent respectivement entre les plateaux 104, 129 et 105, 130, les leviers 106 et 107 étant ainsi maintenus en position radiale.

En faisant tourner ensemble le mandrin 100 et les roues 123 et 124 autour des axes opposées 125 et 126, on peut enrouler une bande 133 de manière à former la bobine 101 autour des barres 102. Pour celà, on peut relier en rotation par tout moyen connu le plateau 104 et le plateau 129 d'une part et le plateau 105 et le plateau 130 d'autre part. De manière simple, on peut également, comme dans l'exemple décrit en référence aux figures 1 et 2, fixer au départ l'extrémité de la bande 133 tout simplement à l'une des roues 123 ou 124 ou aux deux.

La bobine 101 étant formée autour du mandrin 100 porté par le châssis 4 comme le montre la figure 3, on peut procéder à son enlèvement de la manière simple suivante.

Après avoir écarté les plaques de maintien 127 et 128, on extrait les axes d'articulation 125 et 126 en les tirant axialement vers l'extérieur au moyen des poignées 134 et 135 dont ils sont munis. Cette tombe sur le sol. On éloigne alors la bobine 101 du châssis 4.

Pour extraire le mandrin 100 de la bobine 101, on procède de la manière suivante.

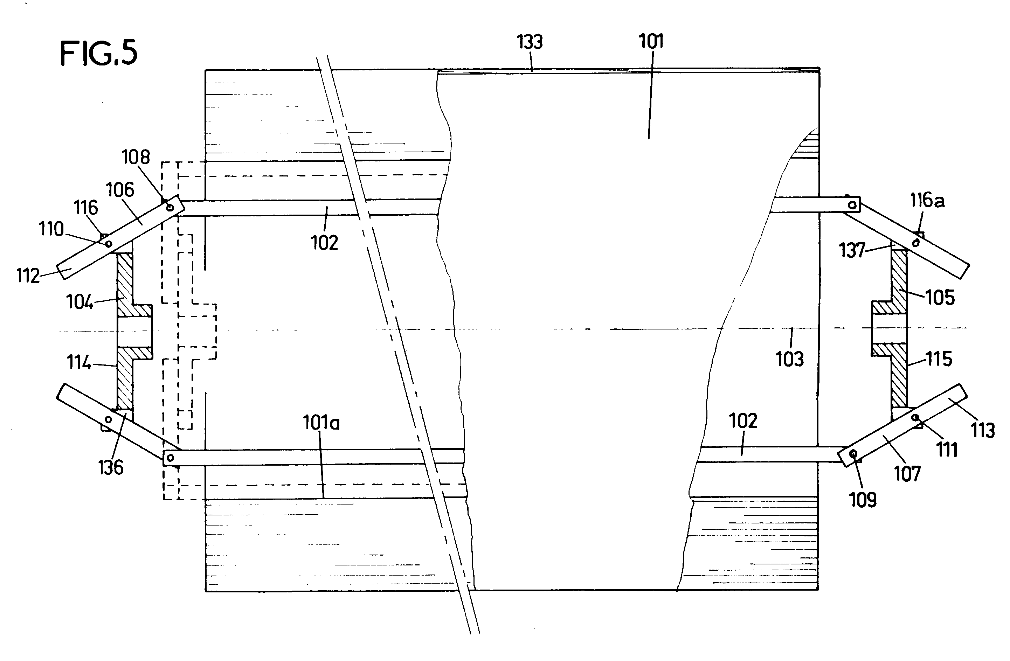

On tire axialement vers l'extérieur sur les plateaux 104 et 105 dans le sens qui les écartent. Ce faisant, les leviers 106 et 107 pivotent dans des plans radiaux. Afin que les leviers 106 et 107 puissent pivoter de cette manière, les plateaux 104 et 105 présentent à leur périphérie des encoches 136 et 137. Les prolongements 112 et 113 s'écartent des faces 114 et 115 des plateaux 104 et 105, et les barres 102 se déplacent vers l'axe 103. Le mandrin 100 prend alors la position rétractée représentée en traits forts sur la figure 5, en venant de la position expansée représentée en traits tirés.

L'enveloppe des barres 102 présentant alors un diamètre inférieur au diamètre intérieure 101a de la bobine 101, on extrait le mandrin 100 en le tirant par l'une de ses extrémités.

La bobine 101 récupérée grâce à la machine 1 peut alors être expédiée vers une usine de retraitement.

Pour replacer le mandrin 100 sur le châssis 4 de la machine 1, on le prend par l'une des barres 102 et on le soulève. Il reprend alors sa position expansée. On l'amène entre les roues 123 et 124 et on enfile les axes 125 et 126 de manière à le remonter. Il est alors de nouveau utilisable sur la machine 1.

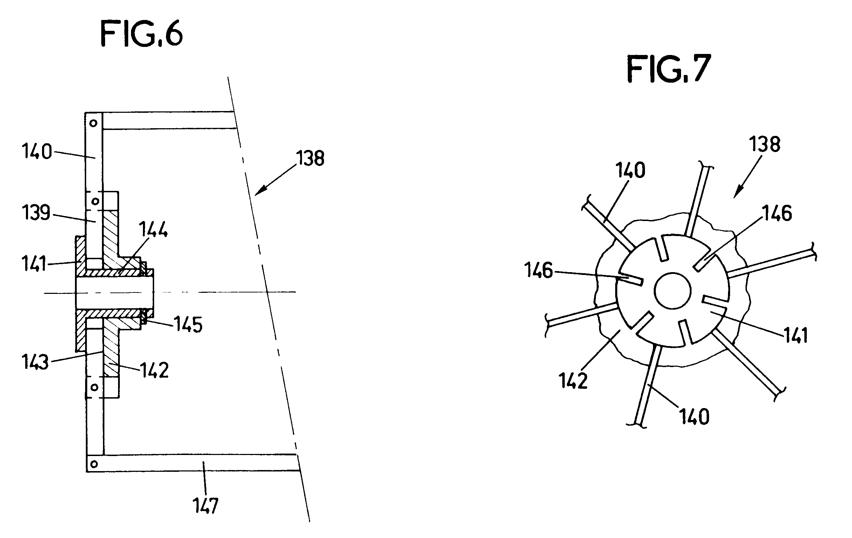

En se reportant maintenant aux figures 6 et 7, on voit qu'on a représenté un mandrin, repéré d'une manière générale par la référence 138, qui se différencie du mandrin 100 décrit précédemment uniquement par le fait que les moyens pour maintenir les prolongements 139 de ses six leviers pivotants 140 en position radiale comprennent un plateau 141 solidaire de son plateau 142.

Le plateau 141 s'étend en vis-à-vis et à distance de la face radiale extérieure 143 du plateau d'extrémité 142 auquel il est relié par l'intermédiaire d'un manchon tubulaire 144 qui porte un organe de maintien axial tel qu'un circlips 145 disposé à l'opposé du plateau 141.

Le plateau 141 présente des encoches 146 de telle sorte que, lorsque ces encoches 146 sont amenées en face des prolongements 139, les leviers 140 peuvent pivoter comme précédemment de manière à déplacer radialement les barres périphériques 147 du mandrin 138 tandis que lorsque ses encoches 146 ne sont pas en face des prolongements 149, le plateau 141 recouvre les prolongements 139 des leviers 140 et maintient ces derniers en position radiale.

On peut bien entendu prévoir des moyens simples pour relier en rotation le plateau 141 et le plateau 143 lorsque ce plateau 141 est en position de maintien, ces moyens pouvant être constitués par une goupille.

A son autre extrémité, le mandrin 138 peut présenter le même montage. Bien évidemment, le mandrin représenté sur les figures 6 et 7 ne nécessite plus de moyens complémentaires associés au châssis de la machine qui étaient formés dans l'exemple précédent par les plateaux 129 et 130.

Bien entendu, dans une exécution simplifiée, on aurait pu prévoir des leviers pivotant uniquement à l'une des extrémités des mandrins, l'autre extrémité des barres étant articulée directement sur l'élément d'extrémité associé, le mandrin présentant alors, en position rétractée, une forme en tronc de cône permettant son enlèvement de l'intérieur d'une bobine par son côté de plus grand diamètre.

La présente invention ne se limite pas à l'exemple décrit. Bien des variantes de réalisation sont possibles notamment en ce qui concerne les moyens rotatifs récepteurs pour enrouler la bande de manière à former une bobine, la structure du tambour et la constitution des moyens de brossage et du mandrin. Des moyens de brossage pourraient en outre être prévus pour brosser la face inférieure de la bande. En particulier, ces moyens de brossage pourraient être formés par une brosse cylindrique associée au rouleau transversal 25, portée par les bras 26 et entraînée en bout par un moteur hydraulique porté par ces bras.

Bien d'autres variantes sont possibles sans sortir du cadre défini par les revendications annexées.

## Revendications

1. Machine destinée à l'enlèvement de bandes étendues sur le sol, comprenant des moyens rotatifs récepteurs (9, 10) pour enrouler la bande (2) à distance du sol afin de former une bobine (2a), des moyens (11, 13) pour entraîner en rotation les moyens récepteurs précités, des moyens de brossage rotatifs (20) et des moyens (21) d'entraînement en rotation de ces moyens de brossage, caractérisée par un tambour (18) monté tournant sur lequel passe la bande avant d'atteindre les moyens récepteurs précités, et en ce que les moyens de brossage rotatifs (20) sont disposés de telle sorte que la bande passe entre ces moyens de brossage et le tambour en appliquant la bande (2a) sur le tambour (18), lesdits moyens de brossage (20) tournant dans le sens tel et étant dans une position telle qu'ils brossent et tirent la bande en direction des moyens récepteurs précités et en direction de ses bords.

2. Machine selon la revendication 1, caractérisée par le fait que ledit tambour (18) est monté libre en rotation.

3. Machine selon l'une des revendications 1 et 2, caractérisée par le fait que ledit tambour (18) présente, au moins sur ses parties d'extrémité, des diamètres allant en diminuant vers chacune de ses extrémités.

4. Machine selon l'une quelconque des revendications 1 à 3, caractérisée par le fait que la partie périphérique du tambour (18) comprend deux parties opposées tronconiques et une partie centrale cylindrique les rejoignant.

5. Machine selon l'une quelconque des revendications précédentes, caractérisée par le fait que la partie périphérique dudit tambour est composée d'une multiplicité de barres (18a) qui s'étendent respectivement dans des plans radiaux de ce tambour.

6. Machine selon la revendication 5, caractérisée par le fait que lesdites barres (18a) s'étendent entre deux platines d'extrémité du tambour, chaque barre présentant une partie centrale coudée à partir de laquelle elles s'étendent rectilignement.

7. Machine selon l'une quelconque des revendications précédentes, caractérisée par le fait que lesdits moyens de brossage comprennent au moins deux brosses cylindriques (20) disposées de part et d'autre du plan radial médian du tambour (18) précité, les axes de ces brosses étant inclinés par rapport à la direction longitudinale de la bande de telle sorte leurs extrémités adjacentes soient, par rapport au sens d'avancement de la bande, en avant de leurs autres extrémités.

8. Machine selon l'une quelconque des revendications précédentes, caractérisée par le fait qu'elle comprend des moyens de régulation (25, 28) de la vitesse de rotation des moyens récepteurs précités en fonction de la tension de la bande en amont de ces moyens récepteurs.

9. Machine selon l'une quelconque des revendications précédentes, caractérisée par le fait qu'elle comprend, entre ledit tambour et les moyens récepteurs précités, des moyens palpeurs (25) sur lesquels passe la bande, ces moyens palpeurs étant déplaçables sous l'effet du déplacement de la bande dans le sens de son épaisseur et étant reliés à un organe de régulation (28) des moyens d'entraînement (13) en rotation des moyens récepteurs précités.

10. Machine selon la revendication 9, caractérisée par le fait que lesdits moyens palpeurs comprennent un rouleau (25) s'étendant transversalement à la bande et monté sur des bras mobiles (26), au moins l'un de ces bras étant reliés à un organe mobile de régulation du circuit hydraulique d'un moteur hydraulique (13) d'entraînement des moyens récepteurs précités.

11. Machine selon l'une quelconque des revendications précédentes, caractérisée par le fait que la bande (2) passe au-dessus du tambour (18) et que des moyens déflecteurs (23) situés près des moyens de brossage (20), au-dessus de la bande, évacuent au-delà des bords de la bande ce qui est brossé.

12. Machine selon l'une quelconque des revendications précédentes, caractérisée par le fait qu'elle comprend des socs déterreurs (16) passant dans la terre sous au moins les bords de la bande (2).

13. Machine selon l'une quelconque des revendications précédentes, caractérisée par le fait que lesdits moyens de brossage sont réglables par rapport audit tambour.

14. Machine selon l'une quelconque des revendications précédentes, caractérisée par le fait qu'elle comprend des moyens de régulation (25, 28) de la vitesse de rotation des moyens récepteurs précités en fonction de la tension de la bande en amont de ces moyens récepteurs.

15. Machine selon la revendication 14, caractérisée par le fait que lesdits moyens de régulation comprennent des moyens palpeurs (25) sur lesquels passe la bande (2) et qui sont disposés entre ledit tambour et les moyens récepteurs précités, ces moyens palpeurs étant déplaçables sous l'effet du déplacement de la bande dans le sens de son épaisseur et étant reliés à un organe de régulation (28) des moyens d'entraînement (13) en rotation des moyens récepteurs précités.

16. Machine selon la revendication 15, caractérisée par le fait que lesdits moyens palpeurs comprennent un rouleau (25) s'étendant transversalement à la bande (2) et monté sur des bras mobiles (26), au moins l'un de ces bras étant reliés à un organe mobile de régulation du circuit hydraulique d'un moteur hydraulique (13) d'entraînement des moyens récepteurs précités.

17. Machine selon l'une quelconque des revendications précédentes, caractérisée par le fait que lesdits moyens récepteurs comprennent un mandrin (100) monté sur le châssis (116) de la machine grâce à des moyens de rotation (125, 126) portant ses extrémités et présentant au moins une partie mobile telle que ce mandrin est séparable du châssis de la machine, ce mandrin présentant des moyens de rétraction permettant son extraction de la bobine formée quand il est séparé du châssis de la machine pour pouvoir être remonté sur ce châssis.

18. Machine selon la revendication 17, caractérisée par le fait que le mandrin précité (100) comprend une multiplicité de barres (102) formant la périphérie du mandrin, un premier et un second éléments d'extrémité (104, 105) espacés dans le sens axial du mandrin, l'une des extrémités desdits barres étant articulée sur le second élément d'extrémité, les autres extrémités desdites barres étant reliées au premier élément d'extrémité (104) par des leviers (106) qui sont articulés d'une part sur ce premier élément d'extrémité et d'autre part sur lesdites barres, des moyens (129) étant prévus pour maintenir lesdits leviers (106) dans une position telle que les barres (102) sont dans une position écartée de l'axe du mandrin, ce dernier étant dans un position expansée, et pour libérer lesdits leviers (106) afin que les barres (102) puissent se rapprocher de l'axe du mandrin lorsque le premier élément d'extrémité (104) est déplacé axialement au mandrin, ce dernier venant alors dans un position rétractée.

19. Machine selon la revendication 18, caractérisée par le fait que le deuxième élément d'extrémité (105) est également relié aux extrémités qui lui sont associées des barres (102) respectivement par l'intermédiaire de leviers (107) articulés d'une part sur ce second élément d'extrémité et d'autre part sur lesdites barres, des moyens (130) étant prévus pour maintenir lesdits leviers dans une position telle que les barres sont dans une position écartée de l'axe du mandrin, ce dernier étant dans une position expansée, et pour libérer lesdits leviers afin que les barres puissent se rapprocher de l'axe du mandrin lorsque le premier élément d'extrémité est déplacé axialement au mandrin, ce dernier venant alors dans une position rétractée.

20. Machine selon l'une des revendications 18 et 19, caractérisée par le fait que les articulations précitées desdits leviers et desdites barres sont formées de telle sorte que ces leviers (104) et ces barres (102) sont pivotables dans des plans radiaux.

21. Machine selon l'une quelconque des revendications 18 à 20, caractérisée par le fait que ledit élément d'extrémité comprend un plateau d'extrémité (104) et que lesdits moyens de maintien associés comprennent un plateau de maintien (129) extérieur à ce plateau d'extrémité, lesdits leviers (106) présentant des prolongements (112) s'étendant entre ces plateaux lorsque le mandrin est à sa position rétractée, et que, pour passer de sa position expansée à sa position rétractée, ledit élément d'extrémité (104) est déplacé vers l'extérieur.

22. Machine selon la revendication 21, caractérisée par le fait que ledit plateau de maintien (141) est monté tournant sur l'élément d'extrémité associé (142) et présente des encoches (146) qui permettent le passage desdits prolongements (139) lorsque ces encoches sont amenées en face de ces prolongements.

23. Machine selon la revendication 21, caractérisée par le fait que ledit plateau (129) est monté sur le châssis (116) de la machine.

24. Machine selon l'une quelconque des revendications 18 à 23, caractérisée par le fait que les moyens de rotation sont formés par deux axes opposés montés sur le châssis et déplaçables axialement pour libérer lesdits éléments d'extrémité.

## Claims

1. Machine designed for removing strips laid out on the ground, comprising rotary reception means (9, 10) for winding the strip (2) at a distance from the ground in order to form a reel (2a), means (11, 13) for driving the said reception means in rotation, rotary brushing means (20) and means (21) for driving these brushing means in rotation, characterised by a drum (18) mounted so as to turn on which the strip passes before reaching the said reception means, and in that the rotary brushing means (20) are arranged in such a way that the strip passes between these brushing means and the drum, thereby applying the strip (2a) on the drum (18), the said brushing means (20) turning in such a direction and being in such a position that they brush and pull the strip in the direction of the said reception means and in the direction of its edges.

2. Machine according to Claim 1, characterised by the fact that the said drum (18) is mounted freely in rotation.

3. Machine according to one of Claims 1 and 2, characterised by the fact that the said drum (18) exhibits, at least on its end parts, diameters which diminish towards each of its ends.

4. Machine according to any one of Claims 1 to 3, characterised by the fact that the peripheral part of the drum (18) comprises two opposing frustoconical parts and a cylindrical centre part which connects them together.

5. Machine according to any one of the preceding claims, characterised by the fact that the peripheral part of the said drum is composed of a multiplicity of bars (18a) which extend respectively in radial planes of this drum.

6. Machine according to Claim 5, characterised by the fact that the said bars (18a) extend between two end plates of the drum, each bar exhibiting an elbowed central part from which they extend in a rectilinear fashion.

7. Machine according to any one of the preceding claims, characterised by the fact that the said brushing means comprise at least two cylindrical brushes (20) arranged on either side of the median radial plane of the said drum (18), the axes of these brushes being inclined with respect to the longitudinal direction of the strip in such a way that their adjacent ends are, with respect to the direction of advance of the strip, forward of their other ends.

8. Machine according to any one of the preceding claims, characterised by the fact that it comprises means (25, 28) for adjusting the rotational speed of the said reception means as a function of the tension of the strip upstream of these reception means.

9. Machine according to any one of the preceding claims, characterised by the fact that it comprises, between the said drum and the said reception means, sensing means (25) on which the strip passes, these sensing means being capable of being displaced under the effect of the displacement of the strip in the direction of its thickness and being connected to a member (28) for adjusting the means (13) for driving the said reception means in rotation.

10. Machine according to Claim 9, characterised by the fact that the said sensing means comprise a roller (25) extending transversely to the strip and mounted on movable arms (26), at least one of these arms being connected to a movable member for adjusting the hydraulic circuit of a hydraulic motor (13) for driving the said reception means.

11. Machine according to any one of the preceding claims, characterised by the fact that the strip (2) passes above the drum (18) and that deflective means (23) situated close to the brushing means (20), above the strip, evacuate that which is brushed to beyond the edges of the strip.

12. Machine according to any one of the preceding claims, characterised by the fact that it comprises unearthing ploughshares (16) passing into the soil under at least the edges of the strip (2).

13. Machine according to any one of the preceding claims, characterised by the fact that the said brushing means can be adjusted with respect to the said drum.

14. Machine according to any one of the preceding claims, characterised by the fact that it comprises means (25, 28) for adjusting the rotational speed of the said reception means as a function of the tension of the strip upstream of these reception means.

15. Machine according to Claim 14, characterised by the fact that the said adjusting means comprise sensing means (25) on which the strip (2) passes and which are arranged between the said drum and the said reception means, these sensing means being capable of being displaced under the effect of the displacement of the strip in the direction of its thickness and being connected to a member (28) for adjusting the means (13) for driving the said reception means in rotation.

16. Machine according to Claim 15, characterised by the fact that the said sensing means comprise a roller (25) extending transversely to the strip (2) and mounted on movable arms (26), at least one of these arms being connected to a movable member for adjusting the hydraulic circuit of a hydraulic motor (13) for driving the said reception means.

17. Machine according to any one of the preceding claims, characterised by the fact that the said reception means comprise a mandrel (100) mounted on the frame (116) of the machine by virtue of rotation means (125, 126) bearing its ends and exhibiting at least one movable part such that this mandrel can be separated from the frame of the machine, this mandrel exhibiting retraction means allowing its extraction from the reel formed when it is separated from the frame of the machine to enable it to be remounted on this frame.

18. Machine according to Claim 17, characterised by the fact that the said mandrel (100) comprises a multiplicity of bars (102) forming the periphery of the mandrel, a first and a second end elements (104, 105) spaced out in the axial direction of the mandrel, one of the ends of the said bars being articulated on the second end element, the other ends of the said bars being connected to the first end element (104) by levers (106) which are articulated, on the one hand, on this first end element, and on the other hand, on the said bars, means (129) being provided to retain the said levers (106) in a position such that the bars (102) are in a position away from the axis of the mandrel, the latter being in an expanded position, and to release the said levers (106) in order that the bars (102) can approach the axis of the mandrel when the first end element (104) is displaced axially to the mandrel, the latter thus coming into a retracted position.

19. Machine according to Claim 18, characterised by the fact that the second end element (105) is also connected to the ends, which are associated with it, of the bars (102), respectively, by means of levers (107) articulated, on the one hand, on this second end element, and on the other hand, on the said bars, means (130) being provided to retain the said levers in a position such that the bars are in a distanced position from the axis of the mandrel, the latter being in an expanded position, and to release the said levers in order that the bars can approach the axis of the mandrel when the first end element is displaced axially to the mandrel, the latter thus coming into a retracted position.

20. Machine according to one of Claims 18 and 19, characterised by the fact that the said articulations of the said levers and the said bars are formed in such a way that these levers (104) and these bars (102) can be pivoted in radial planes.

21. Machine according to any one of Claims 18 to 20, characterised by the fact that the said end element comprises an end plate (104) and that the said associated retaining means comprise a retaining plate (129) on the outside of this end plate, the said levers (106) exhibiting extensions (112) extending between these plates when the mandrel is in its retracted position, and that, in order to pass from its expanded to its retracted position, the said end element (104) is displaced towards the outside.

22. Machine according to Claim 21, characterised by the fact that the said retaining plate (141) is mounted so as to turn on the associated end element (142) and exhibits slots (146) which allow the passage of the said extensions (139) when these slots are brought opposite these extensions.

23. Machine according to Claim 21, characterised by the fact that the said plate (129) is mounted on the frame (116) of the machine.

24. Machine according to any one of Claims 18 to 23, characterised by the fact that the rotation means are formed by two opposing shafts mounted on the frame and which can be axially displaced to release the said end elements.

## Patentansprüche

1. Maschine zum Entfernen von auf dem Boden ausgebreiteten Bändern, welche aufweist: drehbare Aufnahmemittel (9, 10) zum Aufrollen des Bandes (2) im Abstand vom Boden, um eine Spule (2a) zu bilden, Mittel (11, 13) für den Drehantrieb der vorerwähnten Aufnahmemittel, drehbare Bürsteinrichtungen (20) und Mittel (21) für den Drehantrieb dieser Bürsteinrichtungen, gekennzeichnet durch eine drehbar montierte Trommel (18), über die das Band läuft, bevor es die vorerwähnten Aufnahmemittel erreicht, und dadurch, daß die drehbaren Bürsteinrichtungen (20) derart angeordnet sind, daß das Band zwischen diesen Bürsteinrichtungen und der Trommel hindurchläuft, wobei das Band (2a) an der Trommel (18) haftet und wobei die Bürsteinrichtungen (20) sich in einer solchen Richtung drehen und in einer derartigen Position angeordnet sind, daß sie das Band in Richtung auf die vorerwähnten Aufnahmemittel und in Richtung auf seine Ränder hin bürsten und ziehen.

2. Maschine nach Anspruch 1, dadurch gekennzeichnet, daß die besagte Trommel (18) frei drehbar montiert ist.

3. Maschine nach einem der Ansprüche 1 und 2, dadurch gekennzeichnet, daß die besagte Trommel (18) zumindest in ihren Endbereichen Durchmesser aufweist, die sich jeweils in Richtung auf jedes ihrer Enden fortschreitend vermindern.

4. Maschine nach einem der Ansprüche 1 bis 3, dadurch gekennzeichnet, daß der Umfangsbereich der Trommel (18) zwei entgegengesetzt kegelstumpfförmige Abschnitte und einen diese verbindenden, zylindrischen Zentralabschnitt umfaßt.

5. Maschine nach einem der vorangehenden Ansprüche, dadurch gekennzeichnet, daß der Umfangsbereich der besagten Trommel aus einer Vielzahl von Stäben (18a) zusammengesetzt ist, welche sich jeweils in Radialebenen dieser Trommel erstrecken.

6. Maschine nach Anspruch 5, dadurch gekennzeichnet, daß die besagten Stäbe (18a) sich zwischen zwei Endplatten der Trommel erstrecken, wobei jeder Stab einen geknickten Zentralabschnitt aufweist, von dem aus sie sich geradlinig erstrecken.

7. Maschine nach einem der vorangehenden Ansprüche, dadurch gekennzeichnet, daß die besagten Bürsteinrichtungen mindestens zwei zylindrische Bürsten (20) umfassen, welche beiderseits der radialen Mittelebene der besagten Trommel (18) angeordnet sind, wobei die Achsen dieser Bürsten bezüglich der Längsrichtung des Bandes derart geneigt sind, daß ihre benachbarten Enden bezüglich der Vorlaufrichtung des Bandes vor ihren anderen Enden liegen.

8. Maschine nach einem der vorangehenden Ansprüche, dadurch gekennzeichnet, daß sie Regeleinrichtungen (25, 28) für die Drehgeschwindigkeit der vorerwähnten Aufnahmemittel in Abhängigkeit von der Spannung des Bandes im Bereich vor diesen Aufnahmemitteln umfaßt.

9. Maschine nach einem der vorangehenden Ansprüche, dadurch gekennzeichnet, daß sie zwischen der besagten Trommel und den vorerwähnten Aufnahmemitteln Abtastmittel (25) aufweist, über die das Band läuft, wobei diese Abtastmittel unter der Wirkung der Bewegung des Bandes in Richtung seiner Dicke verstellbar und mit einem Regelglied (28) für die Drehantriebsmittel (13) der vorerwähnten Aufnahmemittel verbunden sind.

10. Maschine nach Anspruch 9, dadurch gekennzeichnet, daß die besagten Abtastmittel eine Rolle (25) umfassen, die sich quer zu dem Band erstreckt und auf beweglichen Armen (26) montiert ist, wobei mindestens einer dieser Arme mit einem beweglichen Regelglied für den Hydraulikkreis eines Hydraulikmotors (13) für den Antrieb der vorerwähnten Aufnahmemittel verbunden ist.

11. Maschine nach einem der vorangehenden Ansprüche, dadurch gekennzeichnet, daß das Band (2) oberhalb der Trommel (18) läuft und daß in der Nähe der Bürsteinrichtung (20) oberhalb des Bandes angeordnete Ableitmittel (23) das abgebürstete Material über die Ränder des Bandes hinweg abführen.

12. Maschine nach einem der vorangehenden Ansprüche, dadurch gekennzeichnet, daß sie Grabungs-Pflugscharen (16) aufweist, welche zumindest unter den Rändern des Bandes (2) durch die Erde fahren.

13. Maschine nach einem der vorangehenden Ansprüche, dadurch gekennzeichnet, daß die besagten Bürsteinrichtungen bezüglich der genannten Trommel einstellbar sind.

14. Maschine nach einem der vorangehenden Ansprüche, dadurch gekennzeichnet, daß sie Regeleinrichtungen (25, 28) für die Drehgeschwindigkeit der vorerwähnten Aufnahmemittel in Abhängigkeit von der Spannung des Bandes im Bereich vor diesen Aufnahmemitteln umfaßt.

15. Maschine nach Anspruch 14, dadurch gekennzeichnet, daß die genannten Regeleinrichtungen Abtastmittel (25) umfassen, über die das Band (2) läuft und welche zwischen der Trommel und den vorerwähnten Aufnahmemitteln angeordnet sind, wobei diese Abtastmittel unter der Wirkung der Bewegung des Bandes in Richtung seiner Dicke verstellbar sind und wobei sie mit einem Regelglied (28) für die Drehantriebsmittel (13) der vorerwähnten Aufnahmemittel verbunden sind.

16. Maschine nach Anspruch 15, dadurch gekennzeichnet, daß die besagten Abtastmittel eine Rolle (25) umfassen, die sich quer zum Band (2) erstreckt und auf beweglichen Armen (26) montiert ist, wobei mindestens einer dieser Arme mit einem beweglichen Regelglied für den Hydraulikkreis eines Hydraulikmotors (13) für den Antrieb der vorerwähnten Aufnahmemittel verbunden ist.

17. Maschine nach einem der vorangehenden Ansprüche, dadurch gekennzeichnet, daß die besagten Aufnahmemittel einen Wickelkern (100) umfassen, der an dem Maschinengestell (116) mit Hilfe von Dreheinrichtungen (125, 126) montiert ist, welche seine Enden tragen und mindestens einen beweglichen Abschnitt derart aufweisen, daß der Wickelkern von dem Maschinengestell trennbar ist, wobei der Wickelkern Zieheinrichtungen aufweist, die sein Herausziehen aus der geformten Spule ermöglichen, wenn er von dem Maschinengestell getrennt ist, so daß er wieder an dem Gestell montiert werden kann.

18. Maschine nach Anspruch 17, dadurch gekennzeichnet, daß der vorerwähnte Wickelkern (100) eine Vielzahl von den Umfang des Wickelkerns bildenden Stäben (102) sowie ein erstes und ein zweites Endelement (104, 105), die in Axialrichtung des Wickelkerns beabstandet sind, umfaßt, wobei jeweils das eine Ende der besagten Stäbe an dem zweiten Endelement angelenkt ist und die anderen Enden der besagten Stäbe über Hebel (106) mit dem ersten Endelement (104) verbunden sind, welche Hebel einerseits an diesem ersten Endelement und andererseits an den besagten Stäben angelenkt sind, wobei Mittel (129) vorgesehen sind, um die besagten Hebel (106) in einer derartigen Position zu halten, daß die Stäbe (102) sich in einer von der Achse des Wickelkerns beabstandeten Position befinden, wenn letzterer sich in einer ausgebreiteten Position befindet, und um die besagten Hebel (106) freizugeben, so daß sich die Stäbe (102) der Achse des Wickelkerns annähern können, wenn das erste Endelement (104) in Axialrichtung von dem Wickelkern verstellt wird, wobei letzterer in eine zurückgezogene Position gelangt.

19. Maschine nach Anspruch 18, dadurch gekennzeichnet, daß das zweite Endelement (105) in gleicher Weise mit den ihm zugeordneten Enden der Stäbe (102) jeweils mittels Hebeln (107) verbunden ist, welche einerseits an dem zweiten Endelement und andererseits an den Stäben angelenkt sind, wobei Mittel (130) vorgesehen sind, um die besagten Hebel in einer derartigen Position zu halten, daß die Stäbe sich in einer von der Achse des Wickelkerns beabstandeten Position befinden, wenn letzterer sich in einer ausgebreiteten Position befindet, und um die besagten Hebel freizugeben, so daß sich die Stäbe der Achse des Wickelkerns annähern können, wenn das erste Endelement in Axialrichtung zum Wickelkern verstellt wird, wobei letzterer dann in eine zurückgezogene Position gelangt.

20. Maschine nach einem der Ansprüche 18 und und 19, dadurch gekennzeichnet, daß die vorerwähnten Gelenkverbindungen der besagten Hebel und der besagten Stäbe derart ausgebildet sind, daß diese Hebel (104) und diese Stäbe (102) in Radialebenen schwenkbar sind.

21. Maschine nach einem der Ansprüche 18 bis 20, dadurch gekennzeichnet, daß das besagte Endelement eine Endplatte (104) umfaßt, und daß die besagten zugehörigen Haltemittel eine Halteplatte (129) aufweisen, die außerhalb dieser Endplatte liegt, wobei die besagten Hebel (106) Verlängerungen (112) aufweisen, welche sich zwischen diesen Platten erstrecken, wenn sich der Wickelkern in seiner zurückgezogenen Position befindet und daß das besagte Endelement (104) nach außen verstellt wird, um von seiner ausgebreiteten Position in seine zurückgezogene Position zu gelangen.

22. Maschine nach Anspruch 21, dadurch gekennzeichnet, daß die Halteplatte (141) auf dem zugehörigen Endelement (142) drehbar montiert ist und Aussparungen (146) aufweist, welche die Hindurchbewegung der genannten Verlängerungen (139) ermöglichen, wenn diese Aussparungen so eingestellt werden, daß sie den Verlängerungen gegenüberliegen.

23. Maschine nach Anspruch 21, dadurch gekennzeichnet, daß die besagte Platte (129) auf dem Maschinengestell (116) montiert ist.

24. Maschine nach einem der Ansprüche 18 bis 23, dadurch gekennzeichnet, daß die Dreheinrichtungen durch zwei gegenüberliegende Achsen gebildet sind, die auf dem Gestell montiert und axial verstellbar sind, um die besagten Endelemente freizugeben.
